# EUROPÄISCHE PATENTANMELDUNG

(11) **EP 0 564 776 A1**
(43) Veröffentlichungstag der Anmeldung: **13.10.1993**
(21) Anmeldenummer: 93101930.1
(22) Anmeldetag: 08.02.1993
(51) Int. Cl.: F16F 9/02

(54) **Längenverstellbare Gasfeder und Stuhl mit einer solchen Gasfeder**

(30) Priorität: 24.03.1992 DE 4209446
(71) Anmelder: SUSPA COMPART Aktiengesellschaft, D-90518 Altdorf (DE)
(72) Erfinder: Siebenhaar, Günther, W-8566 Leinburg 2 (DE); Wolf, Herbert, W-8500 Nürnberg (DE)
(74) Vertreter: Rau, Manfred, Dr. Dipl.-Ing.

(57) **Zusammenfassung**

Eine Gasfeder (6) ist mit einer hydraulischen Verstell-Einrichtung (25) durch elastische Verriegelungsmittel verbindbar bzw. lösbar, wobei die Verstell-Einrichtung (25) eine eigenständige Baugruppe darstellt, die eine Auslöse-Einrichtung (26) und eine hiermit über einen Hydraulik-Schlauch (28) verbundene Betätigungseinrichtung (27) aufweist.

## Beschreibung

Die Erfindung betrifft eine längenverstellbare Gasfeder nach dem Oberbegriff des Anspruches 1 und einen mit einer solchen Gasfeder ausgerüsteten Stuhl nach dem Oberbegriff des Anspruches 6.

Bei derartigen längenverstellbaren Gasfedern ist die Allslöse-Einrichtung in einen dem Betätigungsstift für das Ventil zugeordneten Abschnitt der Gasfeder oder eines diese umgebenden zusätzlichen Tragrohres integriert.

Aus der EP 0 423 828 A1 ist es bekannt, an dem dem Betätigungsstift zur Betätigung des internen Ventils zugewandten Ende der Gasfeder, d.h. entweder am freien äußeren Ende der Kolbenstange oder an dem dem Kolbenstangenaustritt entgegengesetzten Ende des Gehäuses, ein zusätzliches Gehäuse anzubringen, in dem sich eine Hydraulikkammer befindet. In dieser Hydraulikkammer ist ein von außen über einen Stift betätigbarer Betätigungskolben verschiebbar angeordnet. Außerdem ragt aus dieser Hydraulikkammer ein Auslöse-Kolben heraus, der gegen den Betätigungsstift anliegt. Zweck dieser Maßnahme ist es primär, die Größe der für das Verschieben des Betätigungsstiftes des Ventils manuell aufzubringenden Kräfte durch eine hydraulische Übersetzung oder Untersetzung beeinflussen zu können.

Aus der DE-PS 15 54 478 ist es bekannt, eine Betätigungs-Einrichtung über einen Hydraulik-Schlauch mit der hohl ausgebildeten Kolbenstange einer Gasfeder zu verbinden, deren Ventil im Kolben angeordnet ist. Bei Betätigung der Betätigungs-Einrichtung wirkt Druckflüssigkeit auf einen Hilfskolben des im Kolben befindlichen Ventilschaftes.

Der Erfindung liegt die Aufgabe zugrunde, eine Gasfeder der gattungsgemäßen Art so auszugestalten, daß die Montage und gegebenenfalls auch Demontage der Verstelleinrichtung von der Gasfeder leicht möglich ist und die Ausgestaltung eines gattungsgemäßen Stuhles mit einer solchen Gasfeder anzugeben.

Diese Aufgabe wird bei einer längenverstellbaren Gasfeder nach dem Oberbegriff des Anspruches 1 durch die Merkmale im Kennzeichnungsteil des Anspruches 1 gelöst. Durch die erfindungsgemäßen Maßnahmen wird die gesamte Verstell-Einrichtung zu einer eigenständigen selbständigen Baugruppe, die in einfacher Weise mit der Gasfeder verriegelbar bzw. von dieser lösbar ist. Damit kann bei einem Schaden der Gasfeder oder bei einem Schaden der Verriegelungsvorrichtung sehr leicht ein Auswechseln erfolgen. Insbesondere kann aber bei der Montage, beispielsweise also beim Einsetzen einer Gasfeder in einen Stuhl, die Verbindung in einfacher Weise am Ende des Montagevorganges hergestellt werden.

Die Ansprüche 2 bis 5 geben vorteilhafte und zumindest teilweise erfinderische Ausgestaltungen der Lösung nach Anspruch 1 wieder.

Durch die erfindungsgemäße Ausgestaltung eines Stuhles mit einer Gasfeder mit erfindungsgemäßer Verstell-Einrichtung, wie es im Anspruch 6 angegeben ist, wird erreicht, daß die Verstell-Einrichtung bei der Herstellung des Stuhles im Sitz bzw. Sitzträger fest vorgesehen sein kann. Die Montage bzw. Demontage einer als Stuhlsäule dienenden Gasfeder erfolgt dann in gleich einfacher Weise wie bei Vorhandensein eines mechanischen Bedienungshebels zur Betätigung des Betätigungsstiftes einer Gasfeder. Die Auslöse-Einrichtung ist und bleibt am Stuhl bzw. Sitzträger. Das Herstellen der Verriegelung zwischen Gasfeder und Auslöseeinrichtung erfolgt selbsttätig beim Befestigen der Gasfeder am Stuhl. Das Lösen der Verbindung erfolgt selbsttätig bei der Demontage der Gasfeder vom Stuhl bzw. Sitzträger. Wenn von Gasfeder die Rede ist, so kann es sich hierbei um die längenverstellbare Gasfeder unmittelbar handeln; sie kann aber auch in einem zusätzlichen Tragrohr angeordnet sein.

Weitere vorteilhafte und zumindest teilweise erfinderische Ausgestaltungen ergeben sich aus den weiteren Unteransprüchen.

Weiterhin ergeben sich weitere Merkmale, Vorteile und Einzelheiten der Erfindung aus der Beschreibung von drei Ausführungsbeispielen anhand der Zeichnung. Es zeigt
- Fig. 1: einen Büro-Stuhl in schematischer Darstellung,
- Fig. 2: eine Gasfeder mit einer Verstell-Einrichtung gemäß der Erfindung in aufgeschnittener Darstellung,
- Fig. 3: eine durch eine hohl ausgebildete Kolbenstange betätigbare Gasfeder mit der Verstell-Einrichtung nach Fig. 2, ebenfalls in im wesentlichen aufgeschnittener Darstellung,
- Fig. 4: einen Teilausschnitt aus dem Stuhl mit einer als Stuhlsäule dienenden längenverstellbaren Gasfeder und eine Verstell-Einrichtung deren Auslöse-Einrichtung am Stuhl angebracht ist, in Explosionsdarstellung,
- Fig. 5: eine Distanz-Hülse der Gasfeder nach Fig. 4 im Längsschnitt,
- Fig. 6: einen Haltering der Gasfeder nach Fig. 4 in Draufsicht,
- Fig. 7: die Gasfeder nach Fig. 4 in fast montiertem Zustand und
- Fig. 8: die Gasfeder nach Fig. 7 in mit dem Stuhl verbundenem Zustand.

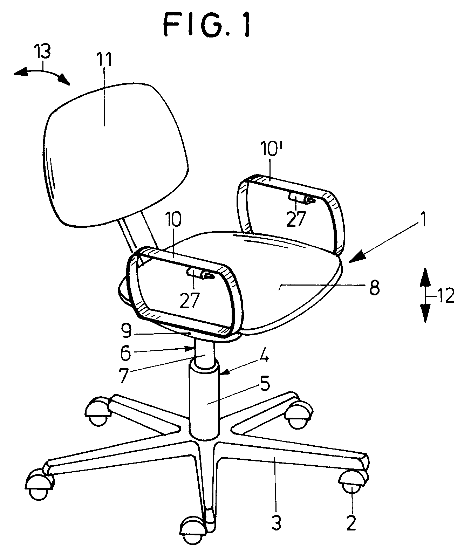

In Fig. 1 ist ein Büro-Stuhl 1 dargestellt. Dieser weist ein über Rollen 2 auf dem Boden abgestütztes Stuhlgestell 3 auf, an dem eine nach oben ragende Stuhlsäule 4 angebracht ist. Diese weist ein Führungsrohr 5 auf, in dem eine längenverstellbare Gasfeder 6 in der Weise angeordnet ist, daß ihre Kolbenstange am Boden des Führungsrohres 5 befestigt ist, während das Gehäuse 7 der Gasfeder 6 verschiebbar im Führungsrohr 5 geführt ist. Das obere Ende des Gehäuses 7 ist an einem einen Sitz 8 tragenden Sitzträger 9 des Stuhles befestigt. Der Stuhl weist Armlehnen 10, 10' und in üblicher Weise eine Rückenlehne 11 auf, die in üblicher Weise verschwenkbar ist. Der Sitzträger 9 mit dem Sitz 8 kann durch entsprechende Längenverstellung der Gasfeder 6 entsprechend dem vertikalen Höhenverstell-Pfeil 12 verstellt werden, während die Rückenlehne 11 entsprechend dem Schwenkrichtungs-Pfeil 13 verstellt werden kann. Die Art der Anordnung einer längenverstellbaren Gasfeder 6 in einem Führungsrohr 5 als höhenverstellbare Stuhlsäule ist aus der DE-PS 19 31 012 (entspr. US-PS 3 711 054 bzw. JA-PS 892 209) allgemein bekannt und in der Praxis verbreitet. Die längenverstellbare Gasfeder 6 ist aus der DE-PS 18 12 282 (entspr. US-PS 3 656 593 und JA-PS 846 405) bekannt und in der Praxis verbreitet.

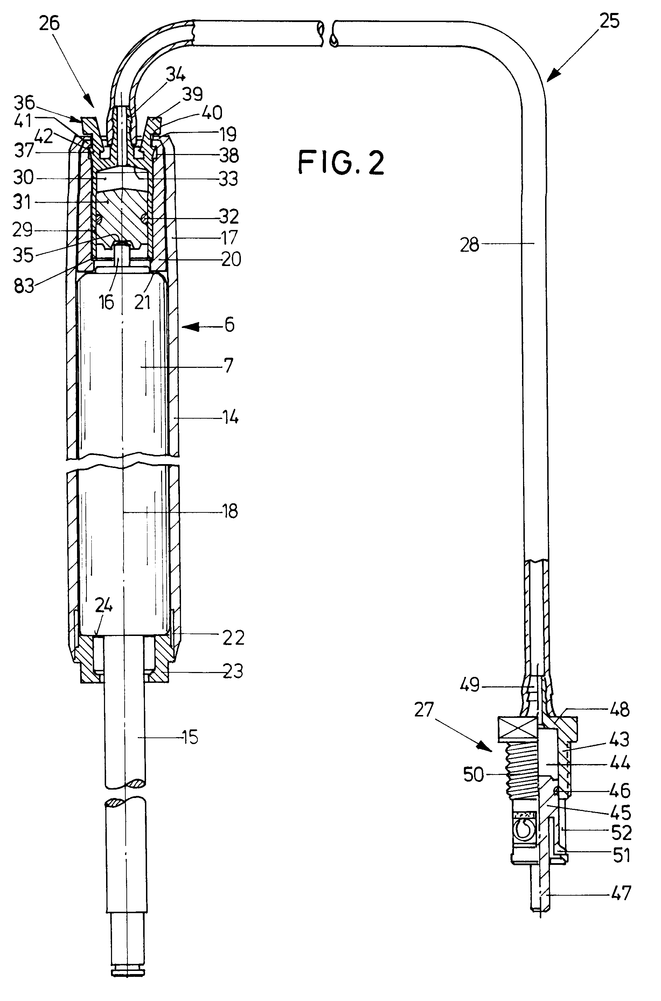

In Fig. 2 ist eine längenverstellbare Gasfeder 6 dargestellt, deren Gehäuse 7 in einem zusätzlichen, im wesentlichen zylindrischen Tragrohr 14 angeordnet ist. Aus einem Ende des Gehäuses 7 der Gasfeder 6 ist die bereits erwähnte Kolbenstange 15 herausgeführt, während aus dem dem Kolbenstangenaustritt entgegengesetzten Ende des Gehäuses 7 ein Betätigungsstift 16 zur Betätigung eines im Gehäuse 7 befindlichen Ventils herausragt, das zur Längenverstellung der Gasfeder 6 mittels des Betätigungsstiftes 16 betätigt werden muß.

An dem dem Betätigungsstift 16 benachbarten Ende des zusätzlichen Tragrohres 14 ist dieses mit einem sich konisch verjüngenden Befestigungsabschnitt 17 versehen, der im Bereich seines freien Endes einen nach innen zur Mittel-Längs-Achse 18 der Gasfeder 6 hin umgebördelten Rand 19 aufweist. Im Befestigungsabschnitt 17 ist eine Distanz-Hülse 20 angeordnet, die sich in Richtung der Achse 18 gegen den Rand 19 abstützt. Gegen diese Hülse 20 stützt sich wiederum die dem Betätigungsstift 16 benachbarte Stirnseite 21 des Gehäuses 7 der Gasfeder 6 ab.

In dem dem Kolbenstangenaustritt benachbarten Bereich des zusätzlichen Tragrohres 14 ist ein Innengewinde 22 ausgebildet, in das eine die Kolbenstange 15 umgebende Ring-Mutter 23 geschraubt ist, die gegen die dem Kolbenstangenaustritt zugeordnete Stirnseite 24 des Gehäuses 7 der Gasfeder 6 anliegt. Mittels dieser Ring-Mutter 23 wird das Gehäuse 7 der Gasfeder 6 gegen die Distanz-Hülse 20 gespannt und letztere wiederum gegen den Rand 19. Hierdurch wird das Gehäuse 7 der Gasfeder 6 im zusätzlichen Tragrohr 14 festgelegt. Insoweit als die Ausgestaltung bis jetzt beschrieben ist, ist sie aus der EP 0 133 524 B1 (entspr. US-PS 4 979 719 und JA-PS 1 818 872) bekannt und in der Praxis eingeführt.

Es ist eine hydraulische Verstell-Einrichtung 25 vorgesehen, die aus einer hydraulischen Auslöse-Einrichtung 26, einer hydraulischen Betätigungs-Einrichtung 27 und einem diese verbindenden druckfesten, flexiblen Hydraulik-Schlauch 28 besteht.

Die Auslöse-Einrichtung 26 weist ein im wesentlichen zylindrisches Gehäuse 29 auf, in dessen zylindrischer Hydraulikkammer 30 ein Auslöse-Kolben 31 mittels einer Dichtung 32 abgedichtet verschiebbar geführt ist. Die Hydraulikkammer 30 ist zu einer Stirnseite hin durch den Auslöse-Kolhen 31 und zur anderen Stirnseite hin durch eine Stirnwand 33 des Gehäuses 29 abgeschlossen, an der ein Anschlußstutzen 34 für den Hydraulik-Schlauch 28 ausgebildet ist, so daß dieser mit der Hydraulik-Kammer 30 verbunden ist.

Das Gehäuse 29 ist zylindrisch ausgebildet und weist einen solchen Außendurchmesser auf, daß es leicht aber im wesentlichen spielfrei in die Distanz-Hülse 20 eingeschoben werden kann, wie aus Fig. 2 ersichtlich ist. Der Auslöse-Kolben 31 weist an seiner nach außen gewandten Fläche eine beispielsweise durch einen Ringbund begrenzte oder gebildete Aufnahme-Ausnehmung 35 für den Betätigungsstift 16 der Gasfeder 6 auf.

Das Gehäuse 29 der Auslöse-Einrichtung 26 ist im radial außenliegenden Bereich seiner Stirnwand 33 mit elastischen Verriegelungs-Zungen 36 versehen, die einander diametral gegenüberstehen und elastisch zur Achse 18 hin gebogen werden können. Sie weisen widerhakenartige Rastvorsprünge 37 auf, die in zugeordnete Hinterschneidungen 38 in der Distanz-Hülse 20 eingreifen. Außerdem weisen sie wiederum sich an die Rastvorsprünge 37 zu ihren äußeren freien Betätigungsenden 39 hin anschließende, radial zur Achse 18 nach außen offene Hinterschneidungen 40 auf, in die der Rand 19 des Befestigungsabschnittes 17 bzw. der benachbarte Rand 41 der Hülse 20 eingreift. Zur Montage der Auslöse-Einrichtung 26 im Befestigungsabschnitt 17 des Tragrohres 14 wird das Gehäuse 29 eingeschoben, wobei der Auslöse-Kolben 31 zur Anlage am Betätigungsstift 16 kommt. Beim Einschieben werden konische Führungsflächen 42 der Rastvorsprünge 37 über den Rand 41 bzw. den Rand 19 geschoben, so daß die Verriegelungs-Zungen 36 aufeinanderzu, also zur Achse 18 hin gedrückt werden. Selbstverständlich kann der Benutzer die Verriegelungs-Zungen 36 auch an ihren Betätigungsenden 39 zusammendrücken, so daß der gleiche Effekt eintritt. Am Ende des Einführens und nach Loslassen der Betätigungsenden 39 bewegen sich die Verriegelungs-Zungen 36 aufgrund ihrer Elastizität nach außen, so daß sich die Rastvorsprünge 37 in die Hinterschneidungen 38 bewegen. Außerdem gelangen der Rand 41 und der Rand 19 in die Hinterschneidung 40 an der jeweiligen Verriegelungs-Zunge 36. Die Auslöse-Einrichtung 26 ist damit im Tragrohr 14 und relativ zur Gasfeder 6 festgelegt. Um sie herauszunehmen, genügt es, die Betätigungsenden 39 der Verriegelungs-Zunge 36 mit den Fingern aufeinanderzu zu drücken, wodurch die geschilderte Verriegelung aufgehoben wird.

Die Betätigungs-Einrichtung 27 weist ebenfalls ein zylindrisches Gehäuse 43 auf, in dem eine zylindrische Hydraulikkamer 44 ausgebildet ist, in der ein Betätigungskolben 45 mittels einer Dichtung 46 abgedichtet verschiebbar ist. Einstückig mit dem Betätigungskolben 45 ist ein Bedienungsstift 47 ausgebildet, der aus einem Ende des Gehäuses 43 herausgeführt ist. Am anderen Ende ist die Hydraulikkammer 44 durch eine Stirnwand 48 des Gehäuses 43 abgeschlossen, in der ein Anschlußstutzen 49 ausgebildet ist, an dem der Hydraulik-Schlauch 28 festgelegt ist, so daß hierüber letzterer mit der Hydraulikkammer 44 verbunden ist. Auf der Außenseite des Gehäuses 43 ist ein Außen-Gewinde 50 ausgebildet, mittels dessen die Betätigungs-Einrichtung 27 beispielsweise an der Armlehne 10 des Stuhles 1 befestigt werden kann. Der Hydraulik-Schlauch 28 wird hierbei beispielsweise durch die Armlehne 10 zum Sitzträger geführt.

Die zwischen dem Auslöse-Kolben 31 und der Stirnwand 33 im Gehäuse 29 begrenzte Hydraulikkammer 30, der Hydraulik-Schlauch 28 und die zwischen dem Betätigungs-Kolben 45 und der Stirnwand 48 des Gehäuses 43 begrenzte Hydraulikkammer 44 ist mit inkompressibler Flüssigkeit gefüllt. Bei einem Druck von außen auf den Bedienungsstift 47 der Betätigungs-Einrichtung 27 in deren Gehäuse 43 hinein, wird demzufolge der Auslöse-Kolben 31 von der Stirnwand 33 des Gehäuses 29 weggeschoben und drückt den Betätigungsstift 16 der Gasfeder 6 in deren Gehäuse 7 hinein, wodurch das im Gehäuse 7 befindliche Ventil geöffnet wird. Die Gasfeder 6 kann dann durch Ausfahren ihrer Kolbenstange 15 aus dem Gehäuse 7 oder durch Hineindrücken der Kolbenstange 15 in das Gehäuse 7 hinein in ihre Länge verstellt werden. Beim Loslassen des Bedienungsstiftes 47 drückt der in der Gasfeder 6 befindliche Gasdruck den Betätigungsstift 16 wieder aus dieser hinaus und schiebt demzufolge den Auslöse-Kolben 31 in Richtung auf die Stirnwand 33 des Gehäuses 29. Die aus der Hydraulikkammer 30 verdrängte Flüssigkeit fließt durch den Hydraulik-Schlauch 28 in die Hydraulikkammer 44 und schiebt den Betätigungs-Kolben 45 mit dem Bedienungsstift 47 wieder in die Ausgangslage zurück.

Damit der Betätigungs-Kolben 45 nicht unabsichtlich aus dem Gehäuse 43 entfernt werden kann, ist er mit einer etwa parallel zum Bedienungsstift 47 verlaufenden Rast-Zunge 51 versehen, die in einem Führungsschlitz 52 des Gehäuses 43 geführt ist. Der Führungsschlitz 52 kommt zu keinem Zeitpunkt in Überdeckung mit der Hydraulikkammer 44. Durch den Führungsschlitz 52 wird auch der maximale Betätigungsweg des Bedienungsstiftes 47 mit Betätigungs-Kolben 45 festgelegt, wodurch gleichzeitig sichergestellt ist, daß der Auslöse-Kolben 31 der Auslöse-Einrichtung 26 auch in mit einer Gasfeder 6 verbundenem Zustand nicht aus dem Gehäuse 29 herausgeschoben werden kann. Die Verstell-Einrichtung 25 ist daher in betriebsfertigem Zustand ein eigenständiges, lagerfähiges, versandfähiges und einbaufähiges Bauteil.

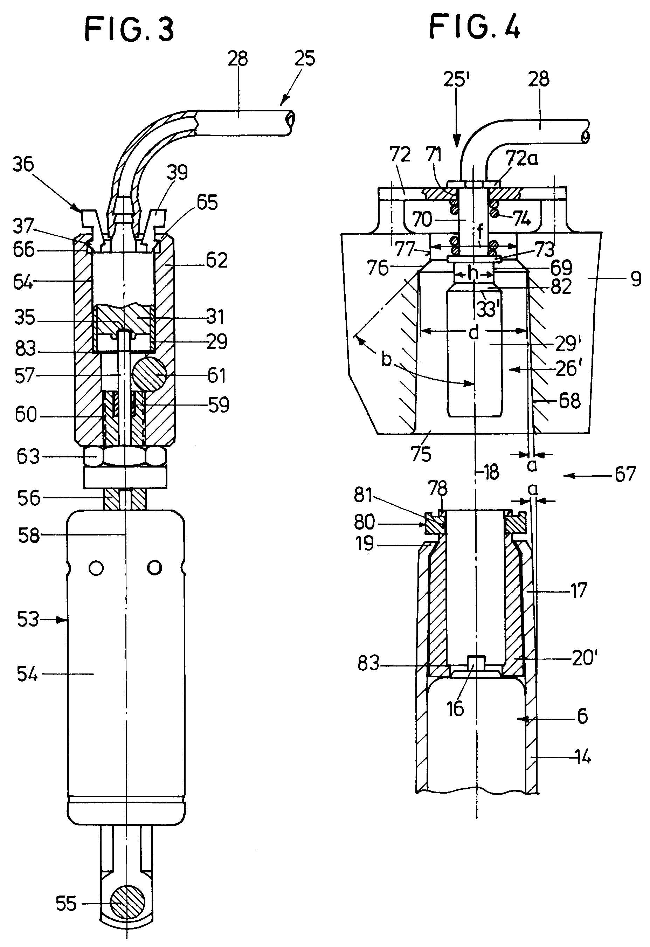

Bei dem Ausführungsbeispiel nach Fig. 3 ist die Verstell-Einrichtung 25 identisch mit der nach Fig. 2. Sie ist daher nur noch teilweise dargestellt. Im Ausführungsbeispiel nach Fig. 3 wird die eine eigenständige Baugruppe darstellende Verstell-Einrichtung 25 zur Betätigung einer längenverstellbaren Gasfeder 53 eingesetzt, deren zylindrisches Gehäuse 54 an seinem geschlossenen Ende mit einem Befestigungselement 55 versehen ist. Bei dieser Gasfeder 53 ist nicht im Bereich des geschlossenen Endes des Gehäuses ein Ventil vorgesehen, sondern ein Ventil ist im Kolben angeordnet. Dieser Kolben ist an einer Kolbenstange 56 angebracht, die aus der dem Befestigungselement 55 entgegengesetzten Seite des Gehäuses 54 abgedichtet aus letzterem herausgeführt ist. In der hohl ausgebildeten Kolbenstange ist ein Betätigungsstift 57 in Richtung der Mittel-Längs-Achse 58 verschiebbar geführt. Im Bereich des außerhalb des Gehäuses 54 liegenden freien Endes der Kolbenstange 56 ist eine Dichtung 59 vorgesehen, um das Eindringen von aggressiven Medien von außen in die Gasfeder zu verhindern. Im Bereich dieses äußeren Endes der Kolbenstange 56 ist diese auch mit einem Außengewinde 60 versehen. Eine derartige durch die hohle Kolbenstange 56 betätigbare längenverstellbare Gasfeder 53 ist aus der DE 38 25 077 A1 (entspr. US-PS 4 949 941 und JA-Hei-1-186 201 bekannt und in der Praxis verbreitet.

Auf dem Außengewinde 60 ist ein Befestigungselement 61 angeordnet. Dieses ist in einem rohrartigen Anschlußelement 62 ausgebildet, das auf das Außengewinde 60 der Kolbenstange 56 aufgeschraubt und dort mittels einer Kontermutter 63 festgelegt ist. Das Befestigungselement 61 dient gleichermaßen wie das Befestigungselement 55 dazu, die Gasfeder 53 schwenkbar an zwei gegeneinander bewegbaren insbesondere gegeneinander verschwenkbaren Teilen anzulenken. Beispielsweise kann eine solche längenverstellbare Gasfeder 53 zur Verschwenkung der Rückenlehne 11 relativ zum Sitzträger 9 und damit zum Sitz 8 eingesetzt werden. Der Einsatz von verhältnismäßig kurzen längenverstellbaren Gasfedern zur Verstellung von Rückenlehnen ist beispielsweise aus der EP 0 144 577 B1 (entspr. US-PS 4 589 697 und JA-Sho-62-37 282) allgemein bekannt und in der Praxis verbreitet. In diesem Fall würde hierzu die Betätigungs-Einrichtung 27 an der anderen Armlehne 10' angebracht.

Das rohrförmige Anschlußelement 62 weist eine dem Gehäuse 29 angepaßte zylindrische Ausnehmung 64 auf, die im Bereich ihres Randes 65 mit einer Hinterschneidung 66 versehen ist, in die die Rastvorsprünge 37 der Verriegelungs-Zungen 36 eingreifen. Auch hier liegt der Betätigungsstift 57 gegen die Aufnahme-Ausnehmung 35 im Auslöse-Kolben 31 an.

In den Fig. 4 und folgende ist ein Ausführungsbeispiel dargestellt, bei dem eine Verstell-Einrichtung 25' zum Einsatz kommt, deren Auslöse-Einrichtung 26' am Sitzträger 9 eines Stuhles festgelegt wird. Der Hydraulik-Schlauch 28 und die Betätigungs-Einrichtung 27 sind identisch mit dem bereits beschriebenen Ausführungsbeispiel, so daß von einer erneuten Darstellung Abstand genommen werden kann. Auch hierbei wird die nicht dargestellte Betätigungs-Einrichtung 27 beispielsweise in bequemer Griffstellung an einer Armlehne eines Stuhles angebracht. Die in diesem Ausführungsbeispiel eingesetzte Gasfeder 6 ist wiederum von einem zusätzlichen Tragrohr 14 umgeben, wie es beim Ausführungbeispiel nach Fig. 2 vorgesehen ist. Unterschiedlich ist, daß eine nicht nur selbsttätig herstellbare, sondern auch selbsttätig lösbare Verriegelungs-Einrichtung 67 für eine Auslöse-Einrichtung 26' vorgesehen ist.

Der Sitzträger 9 ist mit einer konischen Aufnahme 68 für den Befestigungsabschnitt 17 des Tragrohres 14 versehen, in der letzterer durch Einschieben festgesetzt wird. Eine solche Steckverbindung ist in der Praxis allgemein bekannt und wird auch beim Ausführungsbeispiel nach Fig. 2 vorgesehen. Die Auslöse-Einrichtung 26' ist in ihrem Inneren so aufgebaut, wie bereits beschrieben wurde, so daß von einer erneuten Beschreibung Abstand genommen werden kann. Ihr Gehäuse 29' weist - anschließend an ihre Stirnwand 33' - eine Verriegelungsnut 69 auf. Hieran anschließend ist das Gehäuse 29' mit einem Führungsstutzen 70 versehen, der fluchtend zur Achse 18 in einer Führungsbohrung 71 einer am Sitzträger 9 angebrachten Halteplatte 72 in Richtung der Achse 18 verschiebbar geführt ist. Zwischen einem die Verriegelungsnut 69 begrenzenden Ringbund 73 des Gehäuses 29' und der Halteplatte 72 ist eine vorgespannte Schrauben-Druckfeder 74 angeordnet, die die Auslöse-Einrichtung 26' nach unten, also zum offenen Einführende 75 der konischen Aufnahme 68 hindrückt, wobei die maximale Verschiebung in diese Richtung, also die Ruhelage der Auslöse-Einrichtung 26' durch einen Anschlag 72a begrenzt wird. Der Konuswinkel a des Befestigungs-Abschnittes 17 einerseits und der konischen Aufnahme 68 andererseits ist sehr klein. Er beträgt üblicherweise etwa 1,26°.

An dem Einführende 75 entgegengesetzten oberen Ende ist die konische Aufnahme 68 mit einer kegelstumpfförmigen Verriegelungs-Schrägfläche 76 versehen, deren Neigungswinkel begenüber der Achse 18 erheblich größer ist als der Konuswinkel a. Der Neigungswinkel b beträgt beispielsweise 30 bis 45°. An die Verriegelungs-Schrägfläche 76 schließt sich eine zylindrische Verriegelungsfläche 77 an.

Die Distanz-Hülse 20' weist einen sich über den Rand 19 des Tragrohres 14 hinaus erstreckenden ringzylindrischen Ansatz 78 auf, der zwei einander diametral gegenüberliegende Öffnungen 79 aufweist. Auf diesem Ansatz 78 ist ein diesen umgebender Haltering 80 als gesondertes Bauteil angeordnet, der zwei zapfenförmige, also zylindrische Verriegelungsvorsprünge 81 aufweist, die in den Öffnungen 79 angeordnet sind. Der Haltering 80 mit den Verriegelungsvorsprüngen 81 besteht aus elastischem Kunststoff. In nicht verformtem Zustand des Halterings 80 befinden sich dessen Verriegelungsvorsprünge 81 innen bündig mit der Distanz-Hülse 20', wie Fig. 4 entnehmbar ist. Der Außendurchmesser c des Halterings 80 im Bereich der Verriegelungsvorsprünge 81 ist in unverformtem Zustand etwas kleiner als der Innendurchmesser d der konischen Aufnahme 68 am Übergang zur Verriegelungs-Schrägfläche 76. Der Außendurchmesser e des Halterings 80 rechtwinklig zu den Verriegelungsvorsprüngen 81 ist kleiner als die Durchmesser c und d und ist auch kleiner als der Innendurchmesser f der zylindrischen Verriegelungsfläche 77. Die doppelte Länge g der Verriegelungsvorsprünge 81 zuzüglich dem Durchmesser h der Verriegelungsnut 69 ist gleich oder geringfügig kleiner als der Durchmesser f der Verriegelungs-Fläche 77.

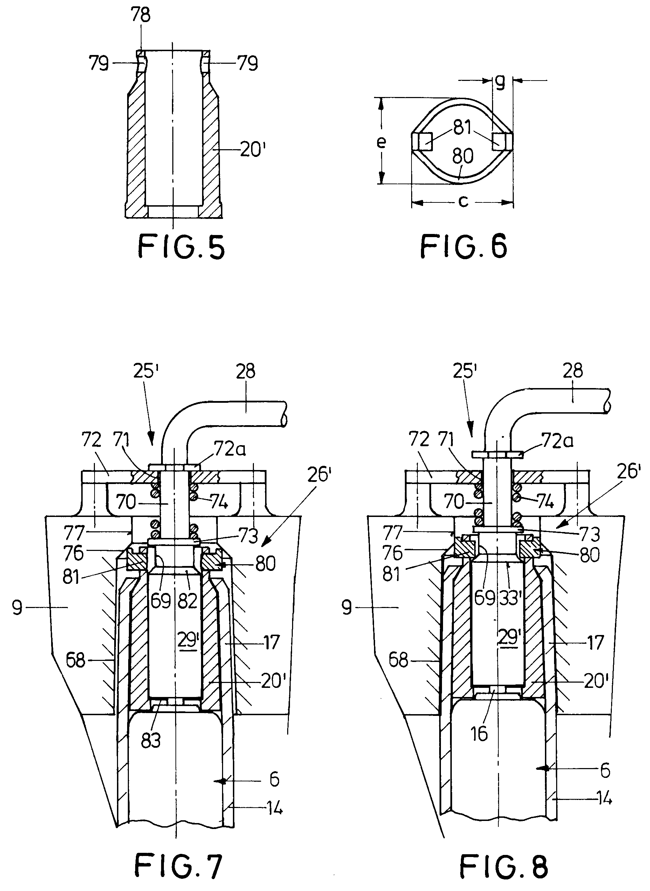

Beim Einführen der Gasfeder 6 mit dem Tragrohr 14 und dem auf die Distanz-Hülse 20' aufgesetzten Haltering 80 in die konische Aufnahme 68 gleitet der Befestigungsabschnitt 17 in letztere hinein. Der Haltering 80 erreicht die Verriegelungs-Schrägfläche 76, bevor der konische Befestigungsabschnitt 17 sich in der konischen Aufnahme 68 festgesetzt hat, wie aus Fig. 7 hervorgeht. Beim weiteren Einschieben des Befestigungsabschnittes 17 in die konische Aufnahme 68 wird der Haltering 80 im Bereich seiner beiden Verriegelungsvorsprünge 81 zusammengedrückt, so daß die Verriegelungsvorsprünge 81 in die Verriegelungsnut 69 der Auslöse-Einrichtung 26' eingreifen. Wenn der Befestigungsabschnitt 17 in der konischen Aufnahme 68 festgesetzt ist, wie es in Fig. 8 dargestellt ist, dann liegt der Haltering 80 im Bereich der Verriegelungsvorsprünge 81 zumindest teilweise an der zylindrischen Verriegelungs-Fläche 77 an, d.h. die Auslöse-Einrichtung 26' ist in Richtung der Achse 18 fest mit der Distanz-Hülse 20 und damit mit dem Tragrohr 14 bzw. der Gasfeder 6 verriegelt. Wenn je nach Durchmessertoleranzen am Befestigungsabschnitt 17 und der konischen Aufnahme 68 die Gasfeder 6 mit Tragrohr 14 unterschiedlich tief in die konische Aufnahme 68 eingeschoben wird, so hat dies auf die Verriegelung keinen Einfluß, da der Haltering 80 entsprechend unterschiedlich tief in die zylindrische Verriegelungs-Fläche 77 eingeschoben wird. Wie im Vergleich der Figuren 7 und 8 feststellbar ist, wird bei dem geschilderten Verriegeln der Führungsstutzen 70 unter entsprechender verstärkter Vorspannung der Druckfeder 74 zum Teil nach oben durch die Halteplatte 72 herausgeschoben.

Wenn die Gasfeder 6 samt Tragrohr 14 und Distanz-Hülse 20' vom Sitzträger 9 gelöst werden soll, dann wird sie aus der konischen Aufnahme 68 herausgezogen. Hierbei wird der Haltering 80 mitgenommen, da er über die in den Öffnungen 79 befindlichen Verriegelungsvorsprünge 81 in Richtung der Achse 18 zur Gasfeder 6 festgelegt ist. Wenn der Haltering 80 von der Verriegelungs-Fläche 77 freikommt, also in den Bereich der kegelstumpfförmigen Verriegelungs-Schrägfläche 76 gelangt, dann kann sich der Haltering im Bereich der Verriegelungsvorsprünge 81 wieder aufweiten, so daß die Verriegelungsvorsprünge 81 radial nach außen aus der Verriegelungsnut 69 herausgedrückt werden. Die Verriegelung wird also gelöst. Dies wird dadurch unterstützt, daß im Bereich der Stirnwand 33' des Gehäuses 29' der Auslöse-Einrichtung 26' eine sich von der Verriegelungsnut 69 zum Gehäuse 29' hin erweiternde Entriegelungs-Schrägfläche 82 ausgebildet ist, über die die Verriegelungsvorsprünge 81 in ihre geöffnete entriegelte Stellung geführt werden.

Die Druckfeder 74 sorgt dafür, daß bei der Montage der Gasfeder 6 die Auslöse-Einrichtung 26' zuerst mit ihrem Gehäuse 29' in die Distanz-Hülse 20' bis zu einem unteren Anschlag 83 eingeführt wird, also in ihre vorgegebene Lage relativ zur Gasfeder 6 gebracht wird, bevor die Auslöse-Einrichtung 26' dann gegen die Kraft der Druckfeder 74 ausweichen kann. Zweckmäßigerweise ist ein solcher Anschlag 83 auch bei den Ausführungsbeispielen nach den Fig. 2 und 3 vorgesehen.

Anstelle des zusätzlichen Tragrohres 14 kann selbstverständlich auch das Gehäuse 7 der Gasfeder 6 unmittelbar entsprechend verlängert sein, also mit einem über den Betätigungsstift 16 hinausragenden Befestigungsabschnitt 17 versehen sein, wie es für die Gasfeder selber aus der DE-OS 19 58 874 bekannt ist.

Die Auslöse-Einrichtungen 26, 26' und die Betätigungs-Einrichtungen 27 bestehen aus geeignetem Kunstsoff; gleiches gilt für die Distanz-Hülsen 20, 20'.

Durch entsprechende Abstimmung der Durchmesser des Auslöse-Kolbens 31 einerseits und des Betätigungs-Kolbens 45 andererseits, kann der Verstell-Einrichtung 25 bzw. 25' eine Übersetzung oder eine Untersetzung gegeben werden.

## Patentansprüche

1. Längenverstellbare Gasfeder (6, 53), mit einem Gehäuse (7, 54), mit einer aus dem Gehäuse (7, 54) herausgeführten Kolbenstange (15, 56), mit einem zur Längenverstellung in Richtung zum Gehäuse (7, 54) hin verschiebbaren Betätigungsstift (16, 57), mit einer hydraulischen Verstell-Einrichtung (25, 25') zum Verschieben des Betätigungsstiftes (16, 57) zum Gehäuse (7, 54) hin, die eine in eine der Gasfeder (6, 53) zugeordnete Aufnahme (Distanz-Hülse 20, 20' bzw. 64) einschiebbare Auslöse-Einrichtung (26, 26') und eine über einen Hydraulik-Schlauch (28) hiermit verbundene Betätigungs-Einrichtung (27) aufweist, wobei ein am Betätigungsstift (16, 57) anliegender Auslöse-Kolben (31) der Auslöse-Einrichtung (26, 26') hydraulisch mit einem manuell verschiebbaren Betätigungs-Kolben (45) der Betätigungs-Einrichtung (27) gekoppelt ist, dadurch gekennzeichnet, daß die Verstell-Einrichtung (25, 25') als eigenständige Baugruppe ausgebildet ist und daß die Auslöse-Einrichtung (26, 26') mit Mitteln zum Herstellen und Lösen einer Verbindung zwischen Auslöse-Einrichtung (26, 26') und Gasfeder (6, 53) versehen ist.

2. Gasfeder nach Anspruch 1, dadurch gekennzeichnet, daß die Mittel zum Herstellen und Lösen einer Verbindung als zwischen der Gasfeder (6, 53) und der Auslöse-Einrichtung (26, 26') wirkende Verriegelungs-Mittel (Verriegelungs-Zungen 36, Haltering 80) ausgebildet sind.

3. Gasfeder nach Anspruch 2, dadurch gekennzeichnet, daß die Auslöse-Einrichtung (26) mit elastischen Verriegelungs-Zungen (30) versehen ist, die mit der Gasfeder (6, 53) verrastbar sind.

4. Gasfeder nach Anspruch 3, dadurch gekennzeichnet, daß die Verriegelungs-Zungen (36) mit Rastvorsprüngen (37) in eine der Gasfeder (6, 53) zugeordnete Hinterschneidung (38, 66) eingreifen.

5. Gasfeder nach Anspruch 3, dadurch gekennzeichnet, daß die Verriegelungs-Zungen (36) mit Betätigungsenden (39) aus der Gasfeder (6, 53) herausragen.

6. Stuhl mit einer eine Gasfeder mit Verstell-Einrichtung nach einem der Ansprüche 1 bis 5 enthaltenden Stuhlsäule, wobei der Stuhl (1) eine konische Aufnahme (68) zur Halterung eines konischen Befestigungsabschnittes (17) der Gasfeder (6) aufweist, dadurch gekennzeichnet, daß der konische Befestigungsabschnitt (17) die Aufnahme (Distanz-Hülse 20') für die Auslöse-Einrichtung (26') umgibt, daß die Auslöse-Einrichtung (26') am Stuhl (Sitzträger 9) festgelegt ist und daß mit der Gasfeder (6) eine Verriegelungs-Einrichtung (67) verbunden ist, die über eine Verriegelungs-Fläche (77) am Stuhl (Sitzträger 9) betätigbar ist.

7. Stuhl nach Anspruch 6, dadurch gekennzeichnet, daß an der Gasfeder (6) Verriegelungs-Vorsprünge (81) vorgesehen sind, die beim Einschieben der Gasfeder (6) in die konische Aufnahme (68) in Ausnehmungen (Verriegelungsnut 69) der Auslöse-Einrichtung (26') eingeschoben werden.

8. Stuhl nach Anspruch 6, dadurch gekennzeichnet, daß zwischen der konischen Aufnahme (68) und der Verriegelungs-Fläche (77) eine Verriegelungs-Schrägfläche ausgebildet ist.

9. Stuhl nach Anspruch 7, dadurch gekennzeichnet, daß die Verriegelungsvorsprünge (81) an einem der Gasfeder (6) zugeordneten Haltering (80) ausgebildet sind.

10. Stuhl nach Anspruch 6, dadurch gekennzeichnet, daß die Auslöse-Einrichtung (26') am Stuhl (Sitzträger 9) gegen die Kraft einer Druckfeder (74) verschiebbar geführt ist.
